# EUROPÄISCHE PATENTSCHRIFT

(11) **EP 0 624 137 B1**
(45) Veröffentlichungstag und Bekanntmachung des Hinweises auf die Patenterteilung: **30.08.1995**
(21) Anmeldenummer: 93917373.8
(22) Anmeldetag: 27.01.1993
(51) Int. Cl.: B65D 1/02, B29C 49/48

(54) **DÜNNWANDIGE KUNSTSTOFFFLASCHE MIT STRUKTURIERTER OBERFLÄCHE**
THIN-WALLED PLASTIC BOTTLE WITH FEATURED SURFACE
BOUTEILLE PLASTIQUE A PAROI MINCE AVEC SURFACE TEXTUREE

(30) Priorität: 05.02.1992 DE 4203209; 24.03.1992 DE 4209436
(43) Veröffentlichungstag der Anmeldung: 17.11.1994
(73) Patentinhaber: Henkel Kommanditgesellschaft auf Aktien, 40191 Düsseldorf (DE)
(72) Erfinder: BERGNER, Rainer, D-4000 Düsseldorf 13 (DE); DRÖSSLER, Hubert, D-4006 Erkrath (DE); KITTSCHER, Peter, D-4044 Kaarst (DE); KONKEL, Siegfried, D-4000 Düsseldorf 13 (DE); WEISS, Volker, D-4018 Langenfeld (DE); WELTGEN, Paul-Otto, D-4010 Hilden (DE)
(86) Internationale Anmeldenummer: EP9300185
(87) Internationale Veröffentlichungsnummer: WO9315961

(56) Entgegenhaltungen:
- EP-A- 0 198 587
- DE-A- 2 746 951
- DE-A- 3 921 258
- DE-B- 1 297 318
- FR-A- 2 525 958
- GB-A- 2 042 408
- US-A- 4 024 975

## Beschreibung

Die Erfindung richtet sich auf eine dünnwandig blasgeformte, vorzugsweise Von einem boden- und deckelfreien Stützmantel umhüllte Kunststoffflasche aus Polyethylen (PE), Polypropylen (PP) oder Polyethylenterephthalat (PET) mit sehr dünner Gesamtwandstärke im Bereich von 0,1 bis 0,3 mm und insbesondere mit drei- oder mehreckigem Querschnitt.

Die in der Technik bekannten Verfahren zur Herstellung von Kunststoffflaschen in Blasformen, sogenannte Flaschenblasverfahren, sind auch geeignet, um damit extrem dünnwandige Kunststoffflaschen herzustellen. Die Herstellung von Kunststoffflaschen aus Polyethylenterephthalat (PET) geschieht beispielsweise dadurch, daß zunächst ein Vorformling gespritzt wird und dieser anschließend unter Wärmeeinfluß in die gewünschte Flaschenform geblasen wird. Kunststoffflaschen aus Polyethylen (PE) werden beispielsweise dadurch hergestellt, daß ein PE-Schlauch den Werkzeugen von Flaschenblasmaschinen zugeführt wird und in den Werkzeugen, den Blasformen, zu der Flaschenform verblasen wird. Es ist bekannt, mit diesen Flaschenblasverfahren sehr dünnwandige Kunststoffflaschen herzustellen. Diese Kunststoffflaschen weisen eine glatte Oberflächenstruktur auf. Um die Festigkeit und Stabilität dieser Flaschen zu erhöhen und um insbesondere beim und nach dem Befüllen mit Flüssigkeit ein Ausbauchen dieser Flaschen zu verhindern, ist es aus der EP-A-0 198 587 bekannt, an derartigen Flaschen ausgeprägte Stabilisierungs- und Versteifungsrippen und -mulden auszubilden. Dies erfordert besonders aufwendig und relativ kompliziert ausgeformte Blasformen. Problematisch und nicht zufriedenstellend gelöst ist bei diesen bekannten Flaschen das Erfordernis einer gleichmäßigen und gleichbleibenden Wandstärke über den gesamten Verlauf der Flaschenwandung.

Sehr dünnwandig blasgeformte Kunststoffflaschen aus Polyethylen (PE) mit sehr dünner Wandstärke im Bereich von 0,1 bis 0,3 mm und mit rechteckigem Querschnitt sowie einer Umhüllung aus einem boden- und deckelfreien Stützmantel aus Karton sind aus der DE-A-39 21 258 bekannt und seit einiger Zeit im Markt eingeführt. Auch bei diesen Flaschen ist die Einstellung einer gleichmäßigen und gleichbleibenden Wandstärke über den gesamten Verlauf der Flaschenwandung problematisch und nicht zufriedenstellend gelöst. Bei der Einstellung der gewünschten extrem dünnen Wandstärke von 0,1 bis 0,3 mm bilden sich beim Verblasen des Kunststoffmaterials in den Blasformen extreme Dünnstellen, die deutlich unterhalb der gewünschten Wandstärke liegen, und es bilden sich zum Teil sogar Löcher in der Flaschenwandung. Ein weiterer Nachteil dieser dünnwandigen Kunststoffflaschen besteht darin, daß die Seitenwände bereits bei der Entnahme aus der Blasform Beulen aufweisen und beim Befüllen mit flüssigem oder rieselfähigem Produkt deutlich ausbauchen.

Weiterhin ist es allgemein bekannter Stand der Technik, Kunststoffflaschen mit üblichen Wandstärken von 0,35 bis 0,8 mm in, beispielsweise durch Ätzen oder Sandstrahlen, aufgerauhten Blasformen herzustellen, wenn aus Gründen des optischen Designs Außenflächenbereiche der Flasche eine matte oder rauhe Struktur aufweisen sollen. Aufgrund der relativ dicken Wandstärke der Flaschen, bei denen dieses Verfahren bisher angewendet wurde, ist dies aber ohne Einfluß auf die Stabilität und Steifigkeit dieser Flaschen.

Aufgabe der Erfindung ist es, eine sehr dünnwandige und versteifungsrippenfreie Kunststoffflasche zu schaffen, die blasgeformt hergestellt einen gleichmäßigen Wandstärkenverlauf und ausreichende Festigkeit, insbesondere Ausbeulstabilität, aufweist.

Bei einer Kunststoffflasche der eingangs bezeichneten Art wird diese Aufgabe gemäß der Erfindung dadurch gelöst, daß zumindest die durch Anlage an eine durch Ätzen, Formfräsen oder Erodieren zumindest bereichsweise bearbeitete Blasformenfläche gebildeten Flaschenseitenwände eine Strukturierung mit Tiefen von 0,05 bis 0,15 mm aufweisen.

Blasgeformte Kunststoffflaschen mit einer Gesamtwandstärken von 0,1 bis 0,3 mm und einer Strukturierung in ihrer Wandung mit Tiefen von 0,05 bis 0,15 mm sind gegenüber glattflächigen Kunststoffflaschen mit entsprechender Wandstärke in ihrer Gesamtstabilität und insbesondere in ihrer Ausbeulstabilität verbessert. Hierbei ist es im Hinblick auf eine verbesserte Ausbeulstabilität bereits ausreichend, wenn nur die Flaschenseitenwände der Kunststoffflasche die erfindungsgemäße Strukturierung aufweisen. Die Strukturierung wird dadurch erzielt, daß die entsprechenden Bereiche der Blasform, an die sich später die Strukturierung aufweisenden Bereiche des Kunststoffmaterials beim Verblasen der Kunststoffflasche anlegen, durch Ätzen, Formfräsen oder Erodieren derart bearbeitet sind, daß die Flasche in den anliegenden Flaschenwandbereichen eine Strukturierung mit Tiefen von 0,05 bis 0,15 mm aufweist. Hierbei hat sich herausgestellt, daß es ausreichend ist, die Blasformen derart zu bearbeiten, daß die bearbeiteten Flächen eine Strukturierung mit Tiefen von 0,01 bis 0,03 mm aufweisen. Bei den sehr dünnen Gesamtwandstärken von 0,1 bis 0,3 mm bildet sich die Strukturierung sowohl auf der Außenfläche als auch auf der Innenfläche der entsprechenden Bereiche der Kunststoffflasche ab. Hierdurch wird in den die Struktur aufweisenden Flaschenwandbereichen der Abstand zwischen der Außenfläche und der Innenfläche - die Gesamtwandstärke - gegenüber glattwandigen Kunststoffflaschen mit derselben Wandstärke im Bereich von 0,1 bis 0,3 mm vergrößert, ohne daß die eigentliche Wandstärke als solche verdickt und eine erhöhte Menge an Kunststoffmaterial eingesetzt wird. Die eine Strukturierung mit Tiefen von 0,05 bis 0,15 mm aufweisenden Flaschenwandbereiche weisen eine verbesserte und erhöhte Biegesteifigkeit auf. Die erfindungsgemäßen dünnwandigen Kunststoffflaschen mit Gesamtwandstärken von 0,1 bis 0,3 mm und einer Strukturierung mit Tiefen von 0,05 und 0,15 mm in Flaschenwandbereichen sind in für übliche dickwandige Kunststoffflaschen ausgelegten Flaschenblasanlagen herzustellen. Zur Herstellung der dünnwandigen Kunststoffflaschen sind die beim Flaschenblasverfahren verwendeten Blasformen durch Ätzen, Formfräsen oder Erodieren, wobei unter Ätzen auch Fotoätzen, Narben, Strukturieren oder Texturieren zu verstehen ist, vorzubereiten. Die in derartigen Blasformen blasgeformten Kunststoffflaschen weisen eine gleichbleibende und gleichmäßige Wandstärke über ihren Wandungsverlauf sowie trotz der extrem dünnen Wand- und Gesamtwandstärke eine große Stabilität und Festigkeit auf. Gegenüber glatten dünnwandigen Kunststoffflaschen, wie sie aus der DE-A-39 21 258 bekannt sind, sind sie in ihrer Stabilität und Festigkeit deutlich verbessert und zeichnen sich durch eine gleichmäßige Wandstärke über ihren Wandungsverlauf aus. Insbesondere in Eckkantenbereichen treten keine Dünn-stellen mit unerwünscht dünnen Wandstärken mehr auf. Die derartig hergestellten Kunststoffflaschen weisen eine sehr gute Formtreue auf, während dünnwandige Flaschen ohne Strukturierung besonders an planen Flächen, wie den Seitenflächen, sehr zum Beulen neigen, d. h. ausbeulen. Sie bauchen bei und nach der Befüllung mit Flüssigkeit oder rieselfähigem Produkt nur noch unwesentlich, d. h. in nicht mehr störendem Maße, aus. Auf die Ausbildung von Versteifungsrippen und/oder -mulden kann verzichtet werden. Die Herstellung von dünnwandigen Kunststoffflaschen in entsprechend bearbeiteten Blasformen bringt auch für das Flaschenblasverfahren Vorteile. Es hat sich herausgestellt, daß bei mit einer Strukturierung versehenen Blasformen eine verbesserte Formenentlüftung an den Flächen und Formtrennebenen, eine bessere Kühlung sowie eine Zykluszeitverkürzung beim eigentlichen Flaschenblasprozeß erzielt wird. Außerdem hat sich gezeigt, daß sich Kunststoffflaschen mit einer Strukturierung mit Tiefen von 0,05 bis 0,15 mm in Flaschenwandbereichen dann besonders gut auf den Transportbändern von Abfüllanlagen befördern lassen, wenn auch die Bodenwandfläche entsprechend strukturiert ist. Gegenüber glattwandigen Kunststoffflaschen mit derselben Wandstärke - und damit ähnlich geringem Gewicht - zeichnet sich die erfindungsgemäße Kunststoffflasche durch ein deutlich besseres Gleit- und Transportverhalten auf Transportbändern von Abfüllanlagen aus.

Während es insbesondere bei von einem boden- und deckelfreien Stützmantel umhüllten Kunststoffflaschen zur Erzielung der vorstehend aufgeführten Vorteile und Verbesserungen gegenüber glattflächig bzw. glattwandig ausgebildeten leichten Kunststoffflaschen ausreichend ist, allein die Flaschenseitenwände mit der Strukturierung zu versehen, ist es bei Verzicht auf eine Kartonumhüllung zur weiteren Verbesserung der Stabilität und Festigkeit der dünnwandigen Flaschen von Vorteil, wenn die durch Anlage an eine in ihrer gesamten formgebenden Oberfläche durch Ätzen, Formfräsen oder Erodieren bearbeitete Blasformenfläche gebildeten Flaschenwandbereiche eine Strukturierung mit Tiefen von 0,05 bis 0,15 mm aufweisen, wie dies die Erfindung in Ausgestaltung vorsieht.

Es lassen sich unterschiedliche Oberflächenstrukturierungen, die beispielsweise eine unterschiedliche Gestaltung von verschiedenen Flaschenwandbereichen ermöglichen, auch dadurch erzeugen, daß die formgebenden Oberflächen der Flaschenblasformen in Teilbereichen geätzt und in anderen Teilbereichen sandgestrahlt sind. Grundsätzlich ist es möglich, Teilbereiche der formgebenden Oberflächen der Flaschenblasformen jeweils mit unterschiedlichen strukturgebenden Methoden zu bearbeiten. Die gesamte formgebende Oberfläche einer Flaschenblasform ist dann durch Anwendung jeweils einer der vorstehenden Methoden in Teilbereichen ganzflächig strukturiert. Das heißt, die Rauhigkeit wird durch Kombination zweier oder mehrerer der aufgeführten Methoden erzielt. Die Kombination von unterschiedlichen Bearbeitungsmethoden hat auch Einfluß auf die Festigkeit der dann jeweils hergestellten Kunststoffflasche. So kann es vorgesehen sein, daß die die Flaschenschulter formenden Bereiche der Flaschenblasform sandgestrahlt und die den Flaschenrumpf und -boden formenden Bereiche geätzt sind.

Zur Herstellung der dünnwandig blasgeformten Kunststoffflaschen mit einer Gesamtwandstärke im Bereich von 0,1 bis 0,3 mm und mit Flaschenwandbereichen, die eine Strukturierung mit Tiefen von 0,05 bis 0,15 mm aufweisen, werden übliche und bekannte Flaschenblasmaschinen und Flaschenblasformen verwendet. Die Flaschenblasformen werden durch Ätzen, Formfräsen, Sandstrahlen oder Erodieren in ihrer formgebenden Oberfläche bearbeitet. Anschließend werden wie bei üblichen Flaschenblasverfahren die Flaschen geblasen. Das Kunststoffeinsatzgewicht bei erfindungsgemäßen Kunststoffflaschen beträgt für eine 1-Liter PE-Flasche beispielsweise 24 +/- 1 g oder auch weniger. Die Bereiche der Flaschenblasformen, an die sich beim Verblasen das Kunststoffmaterial anlegt, das bei der fertigen Kunststoffflasche die Flaschenwandbereiche mit der erfindungsgemäßen Strukturierung aufweisen soll, werden durch Ätzen, Formfräsen oder Erodieren derart vorbereitet, daß nach dem Verblasen des Kunststoffmaterials zu dünnwandigen Kunststoffflaschen mit Gesamtwandstärken von 0,1 bis 0,3 mm diese Bereiche bei der Kunststoffflasche Tiefen von 0,05 bis 0,15 mm aufweisen. Die Strukturierung ist hierbei so tief, daß sie sich auch auf der Flascheninnenseite abbildet. Querschnittlich können die mit der erfindungsgemäßen Strukturierung von Flaschenwandbereichen versehenen Kunststoffflaschen in einer von üblichen blasgeformten Kunststoffflaschen bekannten Form ausgebildet sein. Das heißt, sie können querschnittlich rund, polygonal oder ähnlich ausgebildet sein. Insbesondere sollten sie aber einen drei- oder mehreckigen oder trapezförmigen Querschnitt aufweisen, wenn sie noch von einem boden- und deckelfreien Stützmantel umhüllt werden.

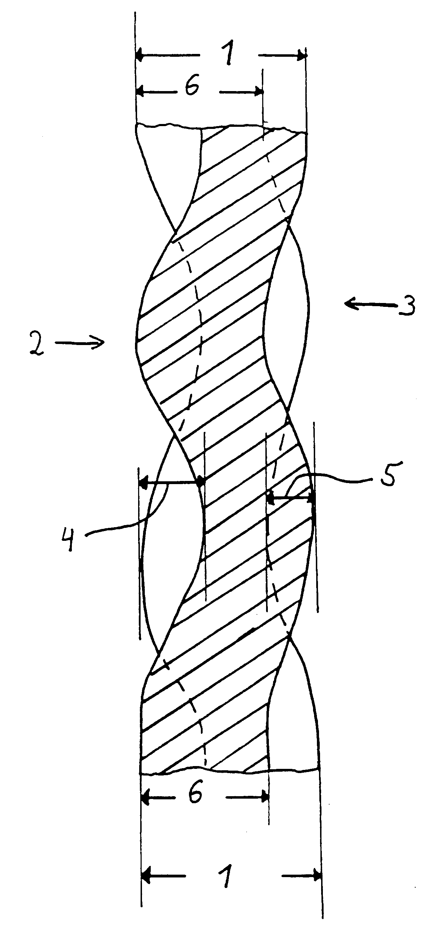

Die Erfindung ist nachstehend anhand der Zeichnung beispielhaft näher erläutert.

Die einzige Figur zeigt schematisch in vergrößerter Darstellung einen Schnitt durch einen Teilausschnitt der Wandung einer dünnwandig blasgeformten Kunststoffflasche aus Polyethylen (PE). Vorzugsweise ist die Kunststoffflasche von einem nicht dargestellten boden- und deckelfreien Stützmantel umhüllt. Die Kunststoffflasche sowie der in der Figur dargestellte Wandungsausschnitt weisen eine Gesamtwandstärke 1 von 0,1 bis 0,3 mm auf. Sowohl auf der Außenfläche 2 als auch auf der Innenfläche 3 ist die Wandung mit einer Strukturierung versehen. Die auf der Außenfläche 2 und auf der Innenfläche 3 ausgeformte Strukturierung weist Tiefen 4, 5 von 0,05 bis 0,15 mm auf. Die Strukturierung wird dadurch erzeugt, daß sich die Außenfläche 2 beim Blasen der Kunststoffflasche an durch Ätzen, Formfräsen oder Erodieren bearbeitete Blasformenflächen anlegt. Bei diesem Herstellprozeß bildet sich die durch die bearbeiteten Blasformenflächen auf der Außenfläche 2 der Wandung erzeugte Strukturierung auch auf der Innenfläche 3 der Wandung bzw. der Innenseite der Kunststoffflasche ab. Während sich hierdurch die eigentliche Wandstärke 6 der Kunststoffflasche nicht vergrößert, stellt sich dennoch eine gegenüber der eigentlichen Wandstärke 6 vergrößerte Wandstärke 1 ein, da der Abstand zwischen der Außenfläche 2 und der Innenfläche 3 aufgrund der Strukturierung größer ist.

## Patentansprüche

1. Dünnwandig blasgeformte, vorzugsweise von einem boden- und deckelfreien Stützmantel umhüllte Kunststoffflasche aus Polyethylen (PE), Polypropylen (PP) oder Polyethylenterephthalat (PET) mit sehr dünner Gesamtwandstärke im Bereich von 0,1 bis 0,3 mm und insbesondere mit drei- oder mehreckigem Querschnitt,
dadurch gekennzeichnet,
daß zumindest die durch Anlage an eine durch Ätzen, Formfräsen oder Erodieren zumindest bereichsweise bearbeitete Blasformenfläche gebildeten Flaschenseitenwände eine Strukturierung mit Tiefen von 0,05 bis 0,15 mm aufweisen.

2. Kunststoffflasche nach Anspruch 1,
dadurch gekennzeichnet,
daß die durch Anlage an eine in ihrer gesamten formgebenden Oberfläche durch Ätzen, Formfräsen oder Erodieren bearbeitete Blasformenfläche gebildeten Flaschenwandbereiche eine Strukturierung mit Tiefen von 0,05 bis 0,15 mm aufweisen.

## Claims

1. A thin-walled, blow-molded plastic bottle - preferably surrounded by a bottomless and topless supporting jacket - of polyethylene (PE), polypropylene (PP) or polyethylene terephthalate (PET) with a very thin overall wall thickness of 0.1 to 0.3 mm and, more particularly, with a triangular or polygonal cross-section, characterized in that at least the side bottle walls formed by application to a blow molding surface at least locally prepared by etching, profile milling or erosion are textured to depths of 0.05 to 0.15 mm.

2. A plastic bottle as claimed in claim 1, characterized in that those parts of the bottle wall which are formed by application to a blow molding surface prepared in its entirety by etching, profile milling or erosion are textured to depths of 0.05 to 0.15 mm.

## Revendications

1. Bouteille en matière plastique à parois minces formée par soufflage, entourée de préférence par une gaine dépourvue de dessus et de fond, constituée en polyéthylène (PE), en polypropylène (PP) ou en polyéthylène-téréphtalate (PETP) et dont l'épaisseur totale de la paroi est très mince, comprise entre 0,1 et 0,3 mm, et présentant plus particulièrement une section transversale triangulaire ou polygonale, cette bouteille étant caractérisée par le fait qu'au moins ses parois latérales, qui sont façonnées par pression sur la surface d'un morne de soufflage traitée, au moins par endroits, par corrosion, fraisage profilé ou érosion, sont pourvues d'une texture présentant des creux d'une profondeur allant de 0,05 à 0,15 mm.

2. Bouteille en matière plastique selon la revendication 1, caractérisée par le fait que les zones des parois de la bouteille formées par pression sur la surface d'un moule de soufflage traitée, sur l'ensemble de sa surface de façonnage, par corrosion, fraisage profilé ou érosion, sont pourvues d'une texture présentant des creux d'une profondeur allant de 0,05 à 0,15 mm.
